# FASCICULE DE BREVET EUROPEEN

(11) **EP 3 969 941 B1**
(45) Date de publication et mention de la délivrance du brevet: **12.07.2023**
(21) Numéro de dépôt: 20723914.6
(22) Date de dépôt: 12.05.2020
(51) Int. Cl.: G01T 1/20

(54) **PROCEDE DE REALISATION D'UN DETECTEUR NUMERIQUE A L'ETAT SOLIDE D'UN RAYONNEMENT INCIDENT**
VERFAHREN ZUR HERSTELLUNG EINES DIGITALEN FESTKÖRPERDETEKTORS EINER EINFALLSSTRAHLUNG
METHOD FOR PRODUCING A SOLID-STATE DIGITAL DETECTOR OF INCIDENT RADIATION

(30) Priorité: 13.05.2019 FR 1904952
(43) Date de publication de la demande: 23.03.2022
(73) Titulaire: Trixell, 38430 Moirans (FR)
(72) Inventeur: BERANGER, Murielle, 38430 MOIRANS (FR); ZEKHNINI, Mohamed, 38430 MOIRANS (FR)
(74) Mandataire: Atout PI Laplace
(86) Numéro de dépôt international: PCT/EP2020/063244
(87) Numéro de publication internationale: WO 2020/229499

(56) Documents cités:
- CN-A- 107 742 628
- JP-A- 2012 013 572
- US-A1- 2012 187 298
- US-A1- 2012 187 299

## Description

L'invention se situe dans le domaine technique des imageurs à rayons X et plus particulièrement de la conversion des rayons X en lumière visible au moyen d'un scintillateur. L'invention concerne un procédé de préparation d'un scintillateur rapporté pour détecteur numérique à l'état solide de rayonnement X comportant un capteur photosensible associé à un convertisseur de rayonnement. Les domaines d'application de ce type de détecteur sont notamment la radiologie : radiographie, fluoroscopie, mammographie, mais également le contrôle non destructif.

Le capteur photosensible est généralement réalisé à partir d'éléments photosensibles à l'état solide arrangés en matrice. Les éléments photosensibles sont réalisés à partir de matériaux semi-conducteurs, le plus souvent du silicium monocristallin pour les capteurs de type CCD ou CMOS, du silicium polycristallin ou amorphe. Un élément photosensible comporte au moins une photodiode, un phototransistor ou une photorésistance. Ces éléments sont déposés sur un substrat ou intégrés dans ledit substrat, qui est généralement un support (aussi appelé dalle) de verre, de plastique (polymère) ou métallique ou d'un autre matériau de synthèse (carbone, alliage, céramique ...), voire encore de silicium.

Ces éléments ne sont généralement pas ou peu sensibles directement aux rayonnements de longueurs d'ondes très courtes comme le sont les rayons X ou gamma. C'est pourquoi on associe le capteur photosensible à un convertisseur de rayonnement qui comporte une couche d'une substance scintillatrice. Cette substance a la propriété, lorsqu'elle est excitée par de tels rayonnements, d'émettre un rayonnement de longueur d'onde supérieure, par exemple de la lumière visible ou proche du visible, auquel est sensible le capteur. La lumière émise par le convertisseur de rayonnement illumine les éléments photosensibles du capteur qui effectuent une conversion photoélectrique et délivrent des signaux électriques exploitables par des circuits appropriés. Le convertisseur de rayonnement sera appelé scintillateur dans la suite de la description.

Le scintillateur peut être réalisé en Oxysulfure de Gadolinium (GADOX ou GOS) ou en lodure de Césium dopé Thallium (Csl:TI) ou tout autre matériau similaire utilisable pour ses propriétés de conversion des rayons X en lumière. Dans le cas d'un scintillateur Csl :Tl, il peut être évaporé directement sur la matrice de photodiodes ou rapporté après dépôt.

Dans la version scintillateur rapporté, le scintillateur (par exemple Csl :TI) est évaporé sur un substrat puis collé sur la matrice de photodiodes. Le substrat doit être compatible avec le procédé de réalisation du scintillateur qui se fait par évaporation sous vide. Ceci impose des contraintes de rigidité mécanique pour permettre la manipulation, de tenue en vide, de température etc... Le choix du substrat est donc limité par les contraintes de fabrication du scintillateur. Après collage sur la matrice de photodiodes, ce substrat fait partie intégrante du détecteur. Il apporte une certaine absorption des rayons X incidents, qui n'est pas souhaitable. Il réfléchit une partie de la lumière émise par le scintillateur et a ainsi un impact sur les performances du détecteur (sensibilité, résolution). Il participe à la masse globale du détecteur. Or, on souhaite garder cette masse la plus faible possible pour les applications portables. Enfin, il engendre une dilatation thermique différentielle entre la matrice de photodiodes et le scintillateur, qui limite l'utilisation en température du détecteur (aussi bien dans les phases de stockage que dans les phases de fonctionnement).

Le substrat scintillateur remplit donc plusieurs fonctions différentes : celle de substrat de croissance de la substance scintillatrice formant le scintillateur et celle de réflecteur dans le détecteur. Ces fonctions ont des exigences différentes qu'il est difficile de faire cohabiter. Par exemple, les exigences de faible absorption des rayons X ou de faible masse orienteraient volontiers le choix vers des polymères ou vers des films minces. Mais les polymères ont une faible tenue thermique qui ne convient pas à la fonction de substrat de croissance et les films minces ont une tenue mécanique trop faible pour permettre la manipulation du scintillateur. Il est donc difficile de trouver un matériau performant à la fois pour les fonctions de substrat et de réflecteur.

Deux principaux types de fabrication sont utilisés pour réaliser l'association entre le scintillateur et la matrice de photodiodes : l'évaporation directe et le scintillateur rapporté.

Le scintillateur en iodure de césium dopé thallium (Csl :TI) peut être évaporé directement sur la matrice de photodiodes, dans ce cas c'est la dalle de verre qui tient lieu de substrat. Pour protéger la dalle qui possède une tenue thermique limitée, la vitesse de croissance doit être faible : cela engendre des temps de fabrication longs. De plus, en cas de défaut lors de l'évaporation ou des post-traitements, l'ensemble du panneau est rebut. Comme les matrices de photodiodes sont chères, le coût des rebuts est élevé.

Lors de l'évaporation, la couche initiale de Csl :Tl, proche du substrat, est mal structurée en aiguilles. En évaporation directe, cette couche se retrouve du côté de la matrice de photodiodes et limite les performances du détecteur car elle crée une réflexion supplémentaire. Par contre, dans cette configuration, le réflecteur est posé ou collé sur les aiguilles de Csl et son choix n'est pas impacté par les contraintes de réalisation du scintillateur.

La solution du scintillateur rapporté n'impose pas les contraintes de réalisation du scintillateur à la matrice de photodiodes, mais le réflecteur qui est aussi le substrat doit tenir les contraintes de réalisation du scintillateur. Les substrats les plus courants sont l'aluminium et le graphite.

L'aluminium possède une bonne tenue thermique mais sa densité est élevée, ce qui engendre une masse et une absorption des rayons X assez hautes. Les feuilles utilisées sont relativement épaisses pour permettre la manipulation lors du procédé de dépôt Csl et lors de l'assemblage sur matrice de photodiodes, ce qui n'est pas favorable pour la masse totale du détecteur. Sa réflectivité est élevée mais n'approche pas les 100%. Son coefficient de dilatation thermique est assez différent de celui de la matrice de photodiodes, ce qui peut générer des défauts lors de cycles thermiques ou si la température du détecteur varie durant son utilisation.

Le substrat graphite présente une bonne tenue thermique avec une absorption des rayons X faible. Ses inconvénients sont une mauvaise réflectivité qui entraîne une faible sensibilité. Il n'est pas disponible en faible épaisseur et a tendance à polluer son environnement en laissant une fine couche de carbone à son contact.

Le brevet US 8779364 décrit un procédé de réalisation d'un panneau scintillateur avec une étape de croissance du scintillateur sur un premier substrat, une étape de fixation d'un second substrat côté aiguilles, une étape de séparation du premier substrat et une étape de suppression d'une première couche de croissance du scintillateur initialement à la base du premier substrat. Ce procédé vise à enlever la couche de croissance initiale du scintillateur qui n'a pas des propriétés optiques intéressantes, par le biais d'une action mécanique telle que le polissage mécanique, la découpe laser, et nécessite l'application d'un deuxième substrat avant le retrait du premier substrat. Ce deuxième substrat a le rôle de substrat de protection du scintillateur. JP 2012 013572 décrit un procédé de réalisation d'un détecteur numérique à l'état solide d'un rayonnement incident.

L'invention vise à pallier tout ou partie des problèmes cités plus haut en proposant un procédé de réalisation d'un détecteur numérique à l'état solide d'un rayonnement incident dissociant les fonctions de substrat d'évaporation du scintillateur et de réflecteur.

A cet effet, l'invention a pour objet un procédé de réalisation d'un détecteur numérique à l'état solide d'un rayonnement incident selon la revendication 1.

Le procédé de réalisation selon l'invention peut comprendre une étape d'application d'un réflecteur sur le scintillateur au niveau de la face frontale amont.

Selon un mode de réalisation, l'étape de séparation du premier substrat du scintillateur est réalisée par pelage ou par un moyen apte à fragiliser l'adhérence entre le scintillateur et le premier substrat.

Avantageusement, l'étape d'application du réflecteur sur le scintillateur comprend une étape de pose du réflecteur sur le scintillateur au niveau de la face frontale amont ou de plaquage du réflecteur sur le scintillateur au niveau de la face frontale amont avec une pression prédéterminée ou de collage du réflecteur sur le scintillateur au niveau de la face frontale amont ou de mise en oeuvre d'une technique de dépôt de couche mince faisant office de réflecteur.

Selon l'invention l'étape de séparation du premier substrat du scintillateur peut comprendre une étape de retrait d'une première zone du scintillateur ayant une épaisseur inférieure à une épaisseur nominale prédéfinie.

Le scintillateur étant destiné à être appliqué sur une surface préalablement définie, l'étape de séparation du premier substrat du scintillateur peut comprendre une étape de retrait d'une deuxième zone du scintillateur dont la face frontale avale est située à l'extérieur de la surface préalablement définie.

L'étape de maintien du scintillateur au niveau de la face frontale avale de la substance scintillatrice peut comprendre une étape de collage du scintillateur sur le capteur photosensible ; ou d'aspiration sous vide ; ou de maintien mécanique, ou interaction électrostatique.

Avantageusement, le réflecteur a une épaisseur inférieure à 200 micromètres, préférentiellement inférieure à 100 nanomètres.

Selon un mode de réalisation, le premier substrat peut être remplacé par une surface absorbante non réfléchissante à la place du réflecteur.

L'invention sera mieux comprise et d'autres avantages apparaîtront à la lecture de la description détaillée d'un mode de réalisation donné à titre d'exemple, description illustrée par le dessin joint dans lequel :
[Fig.1] La figure 1 représente schématiquement les étapes du procédé de réalisation d'un détecteur numérique à l'état solide d'un rayonnement incident comprenant un capteur photosensible selon un mode de réalisation qui n'est pas inclu dans l'objet des revendications.
[Fig.2] La figure 2 représente schématiquement les étapes d'une variante du procédé selon un mode de réalisation qui n'est pas inclu dans l'objet des revendications.
[Fig.3] La figure 3 représente schématiquement les étapes d'un procédé avec retrait d'au moins une partie du scintillateur selon l'invention ;
[Fig.4] La figure 4 représente schématiquement un détecteur obtenu par le procédé de réalisation selon l'invention.

Sur ces figures, dans un souci de clarté, les échelles ne sont pas respectées. Par ailleurs, les mêmes éléments porteront les mêmes repères dans les différentes figures.

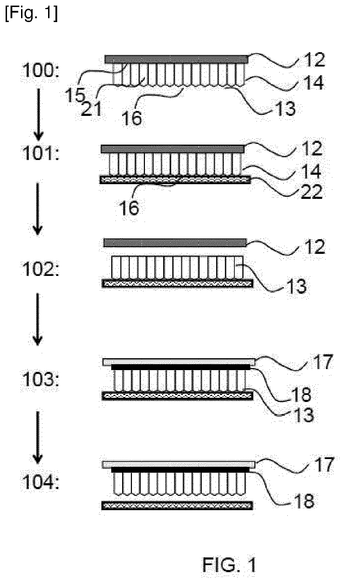

Sur les figures 1 à 3 sont représentées les étapes du procédé de réalisation d'un détecteur numérique selon l'invention. A côté de la référence de l'étape est représenté schématiquement l'état des éléments qui composent le détecteur en fonction de l'étape associée, afin de permettre une meilleure visualisation du procédé selon l'invention.

La figure 1 représente schématiquement les étapes du procédé de réalisation d'un détecteur numérique à l'état solide d'un rayonnement incident comprenant un capteur photosensible. Le procédé de réalisation d'un détecteur numérique 10 à l'état solide d'un rayonnement incident comprenant un capteur photosensible 11 (non visible sur la figure 1) comprend une étape 100 de croissance sur un premier substrat 12 d'un scintillateur 13 (aussi appelé convertisseur de rayonnement) comprenant une substance scintillatrice 14 s'étendant en forme d'aiguilles 21 depuis le premier substrat 12, apte à transformer le rayonnement incident en un second rayonnement auquel le capteur 11 est sensible. La substance scintillatrice 14 comprend une face frontale amont 15 dans la direction de propagation du rayonnement incident, traversée par le rayonnement incident, et une face frontale avale 16 dans la direction de propagation du rayonnement incident, opposée à la face frontale amont 15. Les faces frontales amont 15 et avale 16 peuvent être planes, mais peuvent aussi être irrégulières selon la forme de la substance scintillatrice 14. Le scintillateur 13 peut ainsi être évaporé sur un premier substrat 12 adapté à la croissance même si ce premier substrat 12 est peu performant en tant que réflecteur. Même si le scintillateur le plus courant est Csl :TI, tous les matériaux scintillateurs peuvent utiliser cette invention (par exemple Csl :Na, CsBr, GdO₂S₂ :Tb, perovskite etc...). Le scintillateur 13 peut être nu ou revêtu d'une couche protectrice organique ou minérale. La substance scintillatrice 14 se présente avantageusement sous la forme de fines aiguilles que l'on fait croître sur un support, aussi appelé substrat. Ces aiguilles sont sensiblement perpendiculaires à ce support et elles confinent en partie la lumière émise vers le capteur. Toutefois, l'invention s'applique de manière similaire aux cas où les aiguilles 21 ne sont pas perpendiculaires au premier substrat 12. L'invention s'applique aussi au cas où le scintillateur n'est pas en forme d'aiguilles.

L'étape 100 de croissance du scintillateur 13 sur le premier substrat 12 peut se faire par un procédé d'évaporation, par sublimation, par un dépôt plasma, par pulvérisation, ou par croissance en milieu liquide avec évaporation d'un solvant ou par tout autre moyen. Le scintillateur 13 peut être nu ou protégé par une couche protectrice organique ou minérale.

Le procédé selon l'invention comprend une étape 101 de maintien du scintillateur 13 au niveau de la face frontale avale 16 de la substance scintillatrice 14. Autrement dit, le scintillateur est maintenu du côté opposé au premier substrat 12, du côté de la tête des aiguilles 21, c'est-à-dire du côté de l'extrémité libre des aiguilles 21. L'étape 101 de maintien du scintillateur 13 au niveau de la face frontale avale 16 de la substance scintillatrice 14 peut comprendre une étape de collage du scintillateur 13 sur le capteur photosensible 11. Ou bien l'étape 101 de maintien du scintillateur 13 au niveau de la face frontale avale 16 de la substance scintillatrice 14 peut comprendre une étape d'aspiration sous vide, ou tout autre moyen adapté (mécanique, électrostatique ...). L'élément 22 sur la figure 1 représente un premier élément de maintien du scintillateur 13 utilisé pour la réalisation de l'étape 101 de maintien.

Le procédé selon l'invention comprend une étape 102 de séparation du premier substrat 12 du scintillateur 13. L'étape 102 de séparation du premier substrat 12 du scintillateur 13 peut être réalisée par pelage, ou bien par tout autre moyen visant à fragiliser l'adhérence entre le scintillateur 13 et le premier substrat 12 en vue du retrait du premier substrat 12, par une méthode chimique, mécanique, par usinage, ou par élimination d'une couche intermédiaire, par soufflage, ventouse ou traction, le pelage étant préféré puisqu'il s'agit d'une méthode simple à mettre en oeuvre. Lors de l'étape de pelage, il est important que la force appliquée au scintillateur 13 pour son maintien soit supérieure à la force de pelage. On veillera donc à optimiser l'adhérence du matériau scintillateur 14 sur son premier substrat 12, adhérence qui doit être suffisante pour que le scintillateur 13 se tienne mais assez faible pour en permettre le retrait.

Le procédé selon l'invention peut comprendre une étape 103 d'application d'un réflecteur 17 sur le scintillateur 13 au niveau de la face frontale amont 15. Le réflecteur 17 est judicieusement choisi. Il peut facilement être léger, fin, peu absorbant pour les rayons X car il n'a pas à tenir les contraintes de fabrication du scintillateur 13. Un grand choix de matériaux est disponible.

Le réflecteur 17 peut être un matériau métallique, minéral ou organique. Il peut aussi être multicouche pour éviter la corrosion de l'élément réfléchissant par le Csl ou complexe (type composite), etc...

Le réflecteur 17 n'est pas forcément une pièce spécifique, il peut aussi être constitué par d'autres pièces déjà présentes dans le détecteur comme par exemple la fenêtre d'entrée ou l'enveloppe du détecteur.

Il n'est pas absolument nécessaire d'appliquer un réflecteur 17. Si on ne recherche pas à avoir beaucoup de signal on peut aussi laisser le scintillateur 13 à nu, mais l'application d'un réflecteur 17 permet de maximiser la quantité de lumière reçue par la matrice de photodiodes. On peut aussi faire le choix de mettre un matériau absorbant pour optimiser la résolution spatiale au détriment de la sensibilité.

L'étape 103 d'application du réflecteur 17 sur le scintillateur 13 peut comprendre une étape de pose du réflecteur 17 sur le scintillateur 13 au niveau de la face frontale amont 15. L'étape 103 d'application du réflecteur 17 sur le scintillateur 13 peut comprendre une étape de plaquage du réflecteur 17 sur le scintillateur 13 au niveau de la face frontale amont 15 avec une pression prédéterminée. Ou bien l'étape 103 d'application du réflecteur 17 sur le scintillateur 13 peut comprendre une étape de collage du réflecteur 17 sur le scintillateur 13 au niveau de la face frontale amont 15. Le réflecteur 17 peut être associé au scintillateur par n'importe quelle autre méthode de dépôt : sérigraphie, thermocollage, évaporation, pulvérisation, dépôt d'une couche de métal ou polymère par procédé de dépôt en couche mince.

Il est important de noter que l'invention s'applique aussi si on ne souhaite pas déposer de réflecteur 17 sur le scintillateur 13. Dans ce cas, la quantité de rayons X atteignant le scintillateur 13 est maximale, mais une partie de la lumière émise par le scintillateur 13 peut s'échapper. La fonction réflectrice n'est pas forcément assurée par une pièce spécifique du détecteur. La réflexion de la lumière peut se faire sur la fenêtre d'entrée ou le capot ou toute autre pièce du détecteur. On peut aussi choisir de poser sur le scintillateur un matériau absorbant à la place d'un réflecteur pour favoriser la résolution spatiale au détriment de la sensibilité. Le choix du type de réflecteur 17 est guidé par l'utilisation prévue pour le détecteur.

Enfin, le procédé selon l'invention peut comprendre une étape 104 de libération du scintillateur 13 pour assemblage sur un panneau par collage ou plaquage.

Le principe de l'invention repose sur la dissociation des fonctions de substrat de croissance et de réflecteur dans une solution scintillateur rapporté, pour ne pas être impacté par les inconvénients liés à l'évaporation directe. Le réflecteur 17 (ou absorbant) est choisi librement indépendamment de toutes les contraintes de fabrication du scintillateur 13 : tenue au vide, mécanique, thermique... Il est donc possible d'utiliser un large choix de matériaux dont les polymères. Le réflecteur 17 n'a pas la fonction mécanique de tenue des aiguilles 21 de la substance scintillatrice 14 donc il peut être très mince et avoir une rigidité très faible. Par exemple, le réflecteur 17 peut avoir une épaisseur inférieure à 200 micromètres, voire même inférieure à 100 nanomètres. Ainsi, il pourra être léger pour des applications portables et présenter une faible absorption des rayons X. Pour adapter son coefficient de dilatation à celui de la matrice de photodiodes, un verre très fin métallisé peut être envisagé, alors que ce matériau fragile convient difficilement pour la fonction de premier substrat 12 de croissance. Le premier substrat 12 de croissance peut aussi être simplifié car il n'est plus présent dans le détecteur, il n'a plus besoin d'être réflecteur, léger ou de transmettre les rayons X.

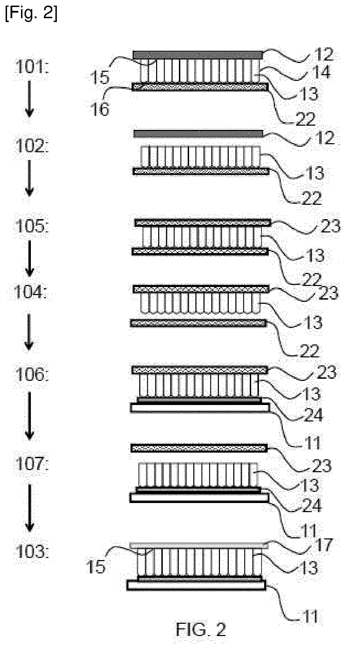

La figure 2 représente schématiquement les étapes d'une variante du procédé. Dans cette variante, après l'étape 100 de croissance du scintillateur 13 sur le premier substrat 12, ont lieu l'étape 101 de maintien du scintillateur 13 au niveau de la face frontale avale 16 de la substance scintillatrice 14 et l'étape 102 de séparation du premier substrat 12 du scintillateur 13. Ces étapes sont similaires aux étapes expliquées précédemment. Ensuite, le procédé peut comprendre une étape 105 de maintien de l'ensemble composé du scintillateur 13 et du premier élément 22. L'étape 105 de maintien peut être réalisée de différentes manières, comme pour l'étape 101. L'élément 23 représente un deuxième élément de maintien représentant la mise en oeuvre de l'étape 105 de maintien. Puis le procédé selon l'invention comprend dans cette variante une étape 104 de libération du scintillateur 13 du premier élément 22. En d'autres termes, le scintillateur 13 maintenu par le deuxième élément 23 est séparé du premier élément 22. Dans cette variante, il s'ensuit une étape 106 d'application du scintillateur 13 sur le capteur photosensible 11. Cette étape 106 d'application est réalisée par exemple par le collage avec la colle 24 ou tout autre adhésif solide ou liquide sur la matrice de photodiodes. Cet adhésif peut être déposé sur la dalle ou sur le scintillateur 13. La matrice de photodiodes est une dalle rigide ou une dalle souple collée sur un renfort ou maintenue mécaniquement sur un support rigide. Pour finir, l'étape 102 de séparation a lieu, pour séparer le deuxième élément 23. Cette variante de procédé est intéressante si on ne souhaite pas coller immédiatement un réflecteur 17 sur le scintillateur. On utilise ainsi un deuxième élément 23 de maintien (électrostatique ou vide ou autre) pour saisir le scintillateur 13 côté début de croissance, libérer les têtes d'aiguilles 21 avant de les coller sur la matrice de photodiodes et appliquer ou non un réflecteur 17 par collage ou plaquage.

Lors des étapes de maintien du scintillateur 13, d'autres moyens de tenue des aiguilles 21 sont envisageables, pourvu que la force d'adhérence des têtes d'aiguilles 21 sur leur substrat soit supérieure à la force d'adhérence des aiguilles 21 sur le premier substrat 12 de croissance afin que le retrait du premier substrat 12 soit possible. Dans les autres moyens de tenue des aiguilles 21, on peut citer (liste non exhaustive) la tenue par interaction électrostatique, la tenue par un système d'aspiration sous vide en aspirant par des buses ou au travers d'un répartiteur de pression. Le scintillateur 13 est alors placé avec ses têtes d'aiguilles 21 sur l'élément de maintien, l'aspiration ou l'interaction est mise en place par l'équipement correspondant et le premier substrat 12 est pelé ou retiré par un autre moyen. On se retrouve alors avec un scintillateur 13 sans substrat qui est difficilement manipulable, car les aiguilles 21 du scintillateur 13 sont peu liées entre elles. Il faut ensuite appliquer un réflecteur 17 côté début de croissance des aiguilles 21, c'est-à-dire au niveau de la face frontale amont 15, pour retrouver un scintillateur 13 manipulable. Ce nouveau scintillateur 13 peut alors être collé ou simplement posé ou pressé sur la matrice de photodiodes.

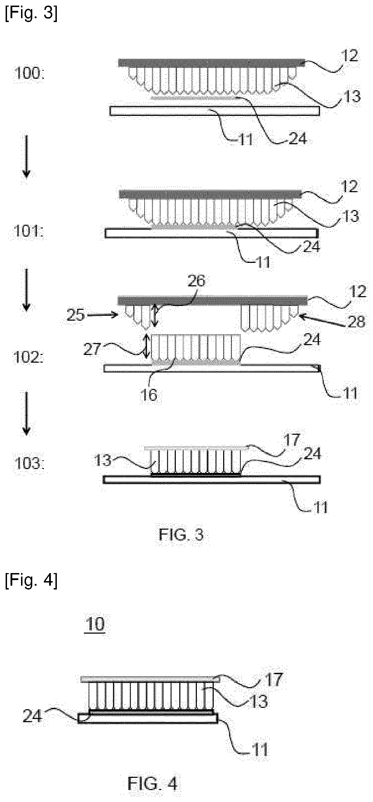

La figure 3 représente schématiquement les étapes d'un procédé avec retrait d'au moins une partie du scintillateur selon l'invention. Dans cette variante, l'étape 102 de séparation du premier substrat 12 du scintillateur 13 comprend une étape de retrait d'une première zone 25 du scintillateur 13 ayant une épaisseur 26 inférieure à une épaisseur nominale 27 prédéfinie. Le scintillateur 13 est réalisé par croissance : lors de cette étape, le premier substrat 12 est maintenu par un cadre. Sur les bords du scintillateur 13, l'épaisseur de la substance scintillatrice 14 augmente d'une valeur zéro à sa valeur nominale 27 avec une certaine pente. Cette zone 25, appelée zone d'établissement, qui fait quelques millimètres en largeur, peut être gênante si on souhaite garder une distance faible entre le bord du détecteur et le premier pixel. Lors de l'étape 101 de maintien, cette zone 25 n'est pas maintenue. Par exemple dans le cas du collage, cette zone 25 n'est pas prise dans l'adhésif. Elle reste sur le premier substrat 12 lors de son retrait (étape 102) et n'est donc plus présente sur le panneau. Cette invention reste applicable dans le cas d'un scintillateur 13 qui ne présente pas de zone d'établissement 25, soit parce que le maintien du scintillateur 13 se fait sans cadre, soit parce que la zone d'établissement 25 a déjà été retirée.

L'étape 102 de séparation du premier substrat 12 du scintillateur 13 peut comprendre une étape de retrait d'une deuxième zone 28 du scintillateur 13. Le scintillateur 13 est destiné à être appliqué sur une surface préalablement définie. La deuxième zone 28 du scintillateur 13 est la zone du scintillateur 13 dont la face frontale avale 16 est située à l'extérieur de la surface préalablement définie. Autrement dit, un certain format de scintillateur 13 est souhaité pour couvrir une surface prédéfinie d'un capteur, et toute la partie du scintillateur 13 en dehors de ce format est retirée.

Cette solution permet d'éliminer le premier substrat de croissance 12 du scintillateur 13 et de le remplacer par un réflecteur 17 plus avantageux pour le détecteur. Il en résulte de nombreux avantages : gain en sensibilité du détecteur si on utilise un matériau avec un coefficient de réflexion supérieur à celui du premier substrat 12 de croissance, allègement du détecteur par l'utilisation d'un matériau mince et léger, moins d'absorption des rayons X ce qui entraîne une meilleure DQE (Efficacité Quantique de Détection), meilleure tenue thermique du détecteur en adaptant le coefficient de dilatation du réflecteur à celui de la matrice de photodiodes.

Les propriétés optiques du nouveau réflecteur 17 peuvent être adaptées au besoin du détecteur et des fonctions autres peuvent être ajoutées dans le réflecteur 17 (électriques, modulation des propriétés optiques, etc...). Le premier substrat 12 de croissance peut aussi être simplifié car il n'a plus à tenir les contraintes du détecteur.

Ainsi l'invention consiste à dissocier les fonctions de substrat de croissance 12 et de réflecteur 17 dans un détecteur de rayons X comprenant un scintillateur 13 rapporté. La fonction de substrat de croissance 12 nécessite un matériau rigide pour pouvoir être manipulable et compatible avec un dépôt de matériau scintillateur. La fonction de réflecteur 17 dans le détecteur nécessite non seulement un matériau réfléchissant la lumière mais aussi une faible absorption des rayons X, une masse légère, un coefficient de dilatation adapté à celui de la matrice de photodiodes, ce qui est en général incompatible avec la fonction de substrat 12. Les scintillateurs rapportés conventionnels se basent sur un compromis entre les propriétés nécessaires aux deux fonctions. La solution proposée dans cette invention permet de s'affranchir de ce compromis et de disposer séparément de matériaux adaptés aux deux fonctions.

Un autre avantage de l'invention est l'élimination des défauts de collage lors du retrait du premier substrat 12. En effet, lorsque le scintillateur 13 est collé sur la matrice de photodiodes avec son premier substrat 12, la rigidité du substrat 12 et les inhomogénéités d'épaisseur du scintillateur 13 peuvent engendrer des défauts de collage. Après retrait du premier substrat 12, les aiguilles de Csl redescendent dans le matériau de collage dès qu'on applique la moindre pression et les défauts de collage sont fortement atténués ou disparaissent. Cet avantage s'applique aussi pour les matrices de photodiodes réalisées sur des substrats flexibles ou organiques ou qui sont fabriquées sur des supports souples. La pression appliquée lors du collage du scintillateur 13 peut créer des contraintes et déformer la dalle souple : cette déformation disparaît dès que le substrat 12 est retiré.

Le retrait du scintillateur 13 peut aussi apporter une solution au problème des dilatations différentielles entre la dalle et le scintillateur 13. Il y a alors moins de contraintes sur le choix du réflecteur 17 car il n'a plus à assurer la fonction de premier substrat 12, il est donc plus facile de choisir un réflecteur 17 dont le coefficient de dilatation est adapté à celui de la dalle. Le nouveau réflecteur 17 peut être choisi de manière à ne pas réagir chimiquement avec le matériau scintillateur déposé. On peut optimiser librement ses propriétés optiques en fonction des performances souhaitées pour le détecteur en adaptant son coefficient de réflexion ou en choisissant un matériau absorbant. De nouvelles fonctions pourraient aussi être ajoutées dans ce réflecteur en fonction des besoins du détecteur.

La figure 4 représente schématiquement un détecteur 10 obtenu par le procédé de réalisation selon l'invention. Le détecteur numérique 10 à l'état solide d'un rayonnement incident comprend un capteur photosensible 11 et un scintillateur 13 obtenu par le procédé de réalisation décrit précédemment.

Le procédé de réalisation selon l'invention permet de combiner les avantages du substrat de croissance rigide et résistant en température avec ceux du réflecteur léger et transparent aux X par une dissociation des fonctions de substrat de croissance et de réflecteur.

Le scintillateur est maintenu par ses aiguilles dans un adhésif adapté afin de retirer le substrat de croissance, ou tout autre moyen de maintien adapté.

Le procédé de réalisation selon l'invention offre la possibilité de se séparer de la zone dite d'établissement du scintillateur, ainsi que toute zone se situant hors du format prédéfini.

Il est également possible d'éliminer des défauts de collage lors du pelage ou du retrait du substrat de croissance.

Le réflecteur peut être choisi assez librement parmi des matériaux minces, légers, n'ayant pas nécessairement une rigidité élevée ni besoin de tenir les contraintes de fabrication du scintillateur. Le substrat de croissance peut aussi être choisi librement sans tenir compte des contraintes du détecteur.

En choisissant judicieusement le réflecteur, le procédé de réalisation selon l'invention permet d'obtenir un détecteur dans lequel il n'y a pas de dilatation différentielle entre le réflecteur et la matrice de photodiodes.

Enfin, d'autres possibilités sont envisageables grâce à un tel procédé : travailler sans réflecteur ou utiliser une pièce présente dans le détecteur comme réflecteur, poser un matériau absorbant sur le détecteur pour favoriser la résolution spatiale au détriment de la sensibilité, ajouter de nouvelles fonctions dans le réflecteur qui n'étaient pas réalisables avec des procédés de l'art antérieur lorsque le substrat de croissance est aussi le réflecteur.

## Revendications

1. Procédé de réalisation d'un détecteur numérique (10) à l'état solide d'un rayonnement incident comprenant un capteur photosensible (11) et un scintillateur (13), comprenant :
a. une étape (100) de croissance sur un premier substrat (12) d'une substance scintillatrice (14) depuis le premier substrat (12), apte à transformer le rayonnement incident en un second rayonnement auquel le capteur (11) est sensible, la substance scintillatrice (14) comprenant une face frontale amont (15) dans la direction de propagation du rayonnement incident, traversée par le rayonnement incident, et une face frontale avale (16) dans la direction de propagation du rayonnement incident, opposée à la face frontale amont (15) ;
b. une étape (101) de maintien du scintillateur (13) au niveau de la face frontale avale (16) de la substance scintillatrice (14) ;
c. une étape (102) de séparation du premier substrat (12) du scintillateur (13),
**caractérisé en ce que** l'étape (102) de séparation du premier substrat (12) du scintillateur (13) comprend une étape de retrait d'une première zone (25) du scintillateur (13) ayant une épaisseur (26) inférieure à une épaisseur nominale (27) prédéfinie.

2. Procédé de réalisation selon la revendication 1, **caractérisé en ce qu'**il comprend une étape (103) d'application d'un réflecteur (17) sur le scintillateur (13) au niveau de la face frontale amont (15).

3. Procédé de réalisation selon l'une quelconque des revendications précédentes, **caractérisé en ce que** l'étape (102) de séparation du premier substrat (12) du scintillateur (13) est réalisée par pelage ou par un moyen apte à fragiliser l'adhérence entre le scintillateur (13) et le premier substrat (12).

4. Procédé de réalisation selon la revendication 2 ou la revendication 3 dépendante de la revendication 2, **caractérisé en ce que** l'étape (103) d'application du réflecteur (17) sur le scintillateur (13) comprend une étape de :
a. Pose du réflecteur (17) sur le scintillateur (13) au niveau de la face frontale amont (15) ou;
b. Plaquage du réflecteur (17) sur le scintillateur (13) au niveau de la face frontale amont (15) avec une pression prédéterminée ou ;
c. Collage du réflecteur (17) sur le scintillateur (13) au niveau de la face frontale amont (15) ou;
d. Mise en oeuvre d'une technique de dépôt de couche mince faisant office de réflecteur.

5. Procédé de réalisation selon l'une quelconque des revendications 2 à 4, **caractérisé en ce que** le scintillateur (13) est destiné à être appliqué sur une surface préalablement définie, et **en ce que** l'étape (102) de séparation du premier substrat (12) du scintillateur (13) comprend une étape de retrait d'une deuxième zone (28) du scintillateur (13) dont la face frontale avale (16) est située à l'extérieur de la surface préalablement définie.

6. Procédé de réalisation selon l'une quelconque des revendications précédentes, **caractérisé en ce que** l'étape (101) de maintien du scintillateur (13) au niveau de la face frontale avale (16) de la substance scintillatrice (14) comprend une étape de :
a. Collage du scintillateur (13) sur le capteur photosensible (11) ; ou
b. Aspiration sous vide ; ou
c. maintien mécanique, ou interaction électrostatique.

7. Procédé de réalisation selon l'une quelconque des revendications 2 à 6, comprenant une étape (103) d'application d'un réflecteur (17) sur le scintillateur (13) au niveau de la face frontale amont (15), **caractérisé en ce que** le réflecteur (17) a une épaisseur inférieure à 200 micromètres, préférentiellement inférieure à 100 nanomètres.

8. Procédé de réalisation selon l'une quelconque des revendications 2 à 7 dépendantes de la revendication 2, **caractérisé en ce que** le premier substrat (12) est remplacé par une surface absorbante non réfléchissante à la place du réflecteur (17).

## Patentansprüche

1. Verfahren zur Herstellung eines digitalen Festkörperdetektors (10) für einfallende Strahlung, der einen lichtempfindlichen Sensor (11) und einen Szintillator (13) umfasst, das Folgendes umfasst:
a. einen Schritt (100) des Aufwachsenlassens einer Szintillationssubstanz (14) auf einem ersten Substrat (12) von dem ersten Substrat (12), die die einfallende Strahlung in eine zweite Strahlung umwandeln kann, für die der Sensor (11) empfindlich ist, wobei die Szintillationssubstanz (14) eine von der einfallenden Strahlung durchquerte, in der Ausbreitungsrichtung der einfallenden Strahlung stromaufwärts gelegene Stirnfläche (15) und eine der stromaufwärts gelegenen Stirnfläche (15) gegenüberliegende, in der Ausbreitungsrichtung der einfallenden Strahlung stromabwärts gelegene Stirnfläche (16) umfasst;
b. einen Schritt (101) des Haltens des Szintillators (13) an der stromabwärtigen Stirnfläche (16) der Szintillationssubstanz (14);
c. einen Schritt (102) des Trennens des ersten Substrats (12) vom Szintillator (13),
**dadurch gekennzeichnet, dass** der Schritt (102) des Trennens des ersten Substrats (12) vom Szintillator (13) einen Schritt des Entfernens einer ersten Zone (25) vom Szintillator (13) mit einer Dicke (26) umfasst, die geringer ist als eine vordefinierte Nenndicke (27).

2. Herstellungsverfahren nach Anspruch 1, **dadurch gekennzeichnet, dass** es einen Schritt (103) des Anbringens eines Reflektors (17) am Szintillator (13) an der stromaufwärtigen Stirnfläche (15) umfasst.

3. Herstellungsverfahren nach einem der vorhergehenden Ansprüche, **dadurch gekennzeichnet, dass** der Schritt (102) des Trennens des ersten Substrats (12) vom Szintillator (13) durch Abschälen oder mit einem Mittel, das die Haftung zwischen dem Szintillator (13) und dem ersten Substrat (12) schwächen kann, durchgeführt wird.

4. Herstellungsverfahren nach Anspruch 2 oder Anspruch 3 in Abhängigkeit von Anspruch 2, **dadurch gekennzeichnet, dass** der Schritt (103) des Anbringens des Reflektors (17) am Szintillator (13) einen Schritt umfasst des:
a. Platzierens des Reflektors (17) auf dem Szintillator (13) an der stromaufwärtigen Stirnfläche (15); oder
b. Pressens des Reflektors (17) auf den Szintillator (13) an der stromaufwärtigen Stirnfläche (15) mit einem vorbestimmten Druck; oder
c. Klebens des Reflektors (17) auf den Szintillator (13) an der stromaufwärtigen Stirnfläche (15); oder
d. Anwendens einer Technik zum Abscheiden einer Dünnschicht, die als Reflektor dient.

5. Herstellungsverfahren nach einem der Ansprüche 2 bis 4, **dadurch gekennzeichnet, dass** der Szintillator (13) zum Aufbringen auf eine zuvor definierte Fläche bestimmt ist, und dadurch, dass der Schritt (102) des Trennens des ersten Substrats (12) vom Szintillator (13) einen Schritt des Entfernens einer zweiten Zone (28) vom Szintillator (13) umfasst, dessen stromabwärtige Stirnfläche (16) sich außerhalb der zuvor definierten Fläche befindet.

6. Herstellungsverfahren nach einem der vorhergehenden Ansprüche, **dadurch gekennzeichnet, dass** der Schritt (101) des Haltens des Szintillators (13) an der stromabwärtigen Stirnfläche (16) der Szintillationssubstanz (14) einen Schritt umfasst des:
a. Klebens des Szintillators (13) an den lichtempfindlichen Sensor (11); oder
b. Ansaugens unter Vakuum; oder
c. mechanischen Haltens oder der elektrostatischen Wechselwirkung.

7. Herstellungsverfahren nach einem der Ansprüche 2 bis 6, das einen Schritt (103) des Aufbringens eines Reflektors (17) auf den Szintillator (13) an der stromaufwärtigen Stirnfläche (15) umfasst, **dadurch gekennzeichnet, dass** der Reflektor (17) eine Dicke von weniger als 200 Mikrometer, vorzugsweise weniger als 100 Nanometer, hat.

8. Herstellungsverfahren nach einem der Ansprüche 2 bis 7 in Abhängigkeit von Anspruch 2, **dadurch gekennzeichnet, dass** das erste Substrat (12) durch eine nicht reflektierende absorbierende Fläche anstelle des Reflektors (17) ersetzt wird.

## Claims

1. A method for producing a solid-state digital detector (10) of incident radiation comprising a photosensitive sensor (11) and a scintillator (13), comprising:
a. a step (100) of growing, on a first substrate (12), a scintillating substance (14) from the first substrate (12), capable of converting the incident radiation into a second radiation to which the sensor (11) is sensitive, the scintillating substance (14) comprising an upstream front face (15) in the direction of propagation of the incident radiation, through which the incident radiation passes, and a downstream front face (16) in the direction of propagation of the incident radiation, opposite the upstream front face (15);
b. a step (101) of holding the scintillator (13) at the downstream front face (16) of the scintillating substance (14);
c. a step (102) of separating the first substrate (12) from the scintillator (13),
**characterised in that** the step (102) of separating the first substrate (12) from the scintillator (13) comprises a step of removing a first region (25) from the scintillator (13) which has a thickness (26) less than a predefined nominal thickness (27).

2. The production method according to claim 1, **characterised in that** it comprises a step (103) of applying a reflector (17) to the scintillator (13) at the upstream front face (15).

3. The production method according to any one of the preceding claims, **characterised in that** the step (102) of separating the first substrate (12) from the scintillator (13) is performed by peeling or using means capable of weakening the adhesion between the scintillator (13) and the first substrate (12).

4. The production method according to claim 2 or claim 3 dependent on claim 2, **characterised in that** the step (103) of applying the reflector (17) to the scintillator (13) comprises a step of:
a. placing the reflector (17) on the scintillator (13) at the upstream front face (15); or
b. pressing the reflector (17) onto the scintillator (13) at the upstream front face (15) with a predetermined pressure; or
c. adhering the reflector (17) to the scintillator (13) at the upstream front face (15); or
d. implementing a technique for depositing a thin film acting as a reflector.

5. The production method according to any one of claims 2 to 4, **characterised in that** the scintillator (13) is intended to be applied on a previously defined surface, and **in that** the step (102) of separating the first substrate (12) from the scintillator (13) comprises a step of removing a second region (28) from the scintillator (13), the downstream front face (16) of which is located outside the previously defined area.

6. The production method according to any one of the preceding claims, **characterised in that** the step (101) of holding the scintillator (13) at the downstream front face (16) of the scintillating substance (14) comprises a step of:
a. adhering the scintillator (13) to the photosensitive sensor (11); or
b. vacuum suction; or
c. mechanical holding, or electrostatic interaction.

7. The production method according to any one of claims 2 to 6, comprising a step (103) of applying a reflector (17) on the scintillator (13) at the upstream front face (15), **characterised in that** the reflector (17) has a thickness of less than 200 micrometres, preferably less than 100 nanometres.

8. The production method according to any one of claims 2 to 7, dependent on claim 2, **characterised in that** the first substrate (12) is replaced with a non-reflective absorbent surface instead of the reflector (17).
